(19) Europäisches Patentamt
European Patent Office
Office européen des brevets

(11) **EP 3 221 757 B1**

(12) **FASCICULE DE BREVET EUROPEEN**

(45) Date de publication et mention
de la délivrance du brevet:
**25.08.2021 Bulletin 2021/34**

(21) Numéro de dépôt: **15804898.3**

(22) Date de dépôt: **18.11.2015**

(51) Int Cl.:
***G05B 19/19*** *(2006.01)*

(86) Numéro de dépôt international:
**PCT/FR2015/053116**

(87) Numéro de publication internationale:
**WO 2016/079425 (26.05.2016 Gazette 2016/21)**

(54) **PROCÉDÉ ET SYSTÈME DE COMPENSATION ADAPTATIVE DE FROTTEMENTS SECS**

VERFAHREN UND SYSTEM ZUR ADAPTIVEN KOMPENSATION VON TROCKENREIBUNG

METHOD AND SYSTEM FOR ADAPTIVE COMPENSATION OF DRY FRICTION

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **18.11.2014 FR 1461133**

(43) Date de publication de la demande:
**27.09.2017 Bulletin 2017/39**

(73) Titulaire: **iXBlue
78100 Saint-Germain-en-Laye (FR)**

(72) Inventeur: **VAU, Bernard
94100 Saint Maur Des Fosses (FR)**

(74) Mandataire: **Jacobacci Coralis Harle
32, rue de l'Arcade
75008 Paris (FR)**

(56) Documents cités:
• **ITTHISEK NILKHAMHANG ET AL: "Adaptive
Friction Compensation using the GMS Model with
Polynomial Stribeck Function", CONTROL
APPLICATIONS, 2006 IEEE INTERNATIONAL
CONFERENCE ON, IEEE, PI, octobre 2006
(2006-10), pages 1085-1090, XP031011436, ISBN:
978-0-7803-9795-8**
• **None**

**Description**

La présente invention concerne un procédé et un système de compensation adaptative de frottements secs. Elle a des applications dans le domaine de la mécatronique et permet d'obtenir de meilleurs suivis de consigne dans des systèmes mécaniques mobiles commandés par des organes effecteurs.

Dans le domaine de la commande des systèmes mécaniques, qu'il s'agisse de servomécanismes ou de systèmes robotisés, les frottements secs desdits systèmes constituent très souvent une source de difficultés pour l'ingénieur chargé de concevoir des lois de contrôle de l'asservissement.

En effet, ces frottements ont un comportement intrinsèquement non-linéaire (non-linéarité dure), préjudiciable à la qualité de suivi d'une consigne de position, vitesse, accélération, effort, aussi bien pour des mouvements de translation que de rotation. Ces frottements peuvent être également générateurs de cycles limites (phénomènes oscillatoires de la position d'un système mécanique asservi sur une consigne constante), ou encore produire un phénomène de « stick and slip » communément appelé « broutage », conduisant le système mécanique à se déplacer par saccades.

L'explication de l'origine de ces frottements relève du domaine de la tribologie. Ils résultent de l'accumulation d'un très grand nombre de phénomènes se produisant à l'échelle microscopique ou même atomique. Malheureusement l'approche microscopique n'est guère utile à l'automaticien, du fait même de la complexité des phénomènes physiques en jeu qui rend son exploitation inenvisageable pour constituer des lois de commande.

Dans une boucle d'asservissement, le frottement sec est donc couramment modélisé par une force (ou un couple) perturbateur, dont le signe est en première approximation opposé à sa vitesse : on parle du frottement de Coulomb. A cela s'ajoute un effet dit effet Stribeck : après immobilisation, il est nécessaire à l'actionneur de vaincre une force (un couple) dit force/couple de « Stiction » dont le module est supérieur à celui nécessaire pour entretenir le mouvement, une fois que celui-ci est effectif.

Dans le domaine de l'automatique, les techniques de compensation des frottements secs existent depuis le début des années 1940. Une des premières méthodes destinées à atténuer le phénomène de broutage consistait à introduire de façon additive sur le signal de commande de l'actionneur un signal sinusoïdal de fréquence relativement élevée par rapport à la bande passante de l'asservissement. Cette technique est dénommée « dither » ou « tremblement ».

A partir des années 60 sont apparues progressivement des modèles macroscopiques destinés à décrire ce frottement d'un point de vue phénoménologique, à l'aide de l'outil mathématique. Ces modèles plus ou moins compliqués, et décrivant de façon plus ou moins fine le comportement de systèmes mécaniques, portent le nom de modèles de Tustin, Karnopp, Dahl, Slimane-Sorine, LuGre... L'élaboration de tels macro-modèles est encore à l'heure actuelle un sujet de recherche.

En parallèle au développement des modèles de frottements, sont apparues progressivement des lois de commande de compensation basées sur lesdits modèles, consistant en particulier à estimer et compenser le couple de frottement en temps réel en fonction de la vitesse mesurée du système mécanique : une application de cette démarche a en particulier été faite à partir du modèle de LuGre par H.Olson, K.J. Aström et al. dans l'article : « Friction models and friction compensation », European journal of control, 1998.

Pour être efficaces de telles lois de commande de compensations de frottements doivent être basées sur des modèles paramétrés avec précision. Or les caractéristiques du frottement d'un système mécanique sont susceptibles d'évoluer dans le temps, en fonction par exemple de la température, de la lubrification des pièces en contact, de l'usure, etc...

Les modèles décrits précédemment ont le point commun de ne dépendre que de la vitesse du système mécanique mobile. Certains, trop sommaires, ne sont pas simulables en tant que tels (comme par exemple le modèle de Coulomb), et entrainent des commutations hautes fréquences conduisant au blocage de l'outil de simulation. D'autres décrivent le phénomène de frottement beaucoup plus finement comme par exemple le modèle de LuGre, mais le nombre de paramètres le constituant est relativement élevé (6 paramètres pour le modèle de LuGre) et l'identification de ces paramètres est une tâche pouvant s'avérer longue à mettre en œuvre, spécialement dans un contexte industriel où, notamment, le respect des délais est un critère important.

En 2009 a été publié un nouveau modèle de frottements secs par Philippe de Larminat dans l'ouvrage « Automatique appliquée, 2nde édition », édition Hermès. Ce modèle, à l'opposé des précédents, a été élaboré en partant du constat que l'effort de frottement est fonction non seulement de la vitesse mais également de la force (ou du couple) délivré par l'actionneur. Ce modèle est, comme le souligne l'auteur, un des plus simples qui n'ait jamais été développé. Il décrit l'effet Coulombien et également l'effet Stribeck. De plus, ce modèle présente l'avantage de comporter un nombre restreint de paramètres : deux paramètres pour l'effet Coulombien et un troisième pour l'effet Stribeck.

Associé à ce modèle, une loi de commande de compensation a été proposée dans le même ouvrage, qui elle aussi présente une simplicité très intéressante pour une implémentation en temps-réel dans un cadre industriel. Cette loi de commande ne tient compte que de la masse ou de l'inertie du système mécanique mobile commandé, d'une constante de temps mineure et d'une variable représentative du module de Coulomb. Cette loi de commande de compensation suppose néanmoins, pour être efficace, une connaissance précise du module de Coulomb du frottement. A défaut, la loi de commande « surcompense » ou « sous-compense » le frottement et les effets bénéfiques sur les asservissements du système mécanique sont très amoindris. Ainsi, cette loi de commande de compensation de frottements secs aussi performante soit-elle, risque fort d'avoir une efficacité éphémère, puisqu'elle deviendra inopérante lorsque les paramètres physiques du frottement auront évolué au cours du temps.

Aussi, propose-t-on ici d'ajouter une structure adaptative à la loi de commande de compensation présentée dans l'ouvrage de Ph. de Larminat cité précédemment et c'est ce que propose la présente invention.

On connait dans ce domaine un article de M. Itthise Nilkhamhang « Adaptive Friction Compensation using the GMS Model with Polynomial Stribeck function », 2006 IEEE International Conférence on Control Applications, XP031011436, qui propose de linéariser un modèle GMS.

Dans la suite on mentionne la masse pour le système mécanique commandé mobile mais on doit le comprendre dans le contexte de l'invention comme étant une masse proprement dit ou comme une inertie proprement dit selon les cas. De même, on mentionne une force pour le signal de commande de mouvement mais on doit le comprendre dans le contexte de l'invention comme étant une force proprement dit ou comme un couple proprement dit selon les cas. De même la position, la vitesse et l'accélération peuvent être de types linéaire ou angulaire selon les cas. En effet, le mouvement peut être linéaire et/ou angulaire et plus généralement quelconque.

Ainsi, l'invention concerne un procédé de compensation de frottements secs pour un système mécanique d'un appareillage comportant au moins une masse ou inertie M mobile sous l'effet d'au moins un organe effecteur commandé par un signal de commande U en force ou couple, la masse ou inertie devant se mouvoir selon les prescriptions d'un signal de consigne $C_r$ choisi parmi un ou plusieurs de la position (linéaire ou angulaire suivant les cas) $X_r$, de la vitesse (linéaire ou angulaire suivant les cas) $V_r$ et de l'accélération (linéaire ou angulaire suivant les cas), le mouvement du système mécanique étant caractérisé par un signal de mouvement Y choisi parmi un ou plusieurs de la position X, de la vitesse V et de l'accélération (linéaire ou angulaire suivant les cas), dans lequel :

- on définit un modèle idéal de la boucle fermée recevant en entrée le signal de consigne Cr et produisant en sortie un signal de mouvement idéal Ym relatif au mouvement de la masse ou inertie selon un modèle idéal du système mécanique,
- on définit une loi de commande de compensation de frottements secs recevant en entrée le signal de consigne Cr et produisant en sortie le signal de commande U pour l'organe effecteur mettant la masse ou inertie en mouvement et dont le mouvement est mesuré par au moins un capteur de mesure de mouvement ledit capteur produisant un signal de mesure de mouvement Y, la loi de commande de compensation de frottements secs étant adaptative en fonction d'un paramètre de valeur des frottements secs S,
  ladite loi de commande de compensation de frottements secs étant basée sur le modèle de frottement suivant :

$$ P = \min\left( \max\left( \frac{VM}{\tau} + U, -S \right), S \right), $$

où V est la vitesse de la masse ou inertie mobile soumise au frottement et $\tau$ une constante de temps mineure,
- on compare entre eux le signal de mouvement idéal Ym et le signal de mesure de mouvement Y pour produire un signal d'erreur $\varepsilon(t)$,
- on calcule une l'estimation $\hat{S}$ des frottements secs S en fonction du signal d'erreur $\varepsilon(t)$,
- on utilise ladite estimation $\hat{S}$ en tant que paramètre de valeur des frottements secs dans la loi de commande de compensation de frottements secs afin de corriger le signal de commande en fonction de l'estimation $\hat{S}$ de valeur des frottements secs.

Dans divers modes de mise en œuvre de l'invention, les moyens suivants pouvant être utilisés seuls ou selon toutes les combinaisons techniquement possibles, sont employés :

- la vitesse V est soit mesurée directement, soit estimée et notamment par un observateur,
- le signal de commande U est un signal de commande de force ou un signal de commande de couple,
- le signal de commande U est transformé en signal électrique adapté à la commande de l'effecteur électrique,
- le signal de commande U est transformé en signal pneumatique adapté à la commande de l'effecteur pneumatique,
- le signal de commande U est transformé en signal hydraulique adapté à la commande de l'effecteur hydraulique,
- le signal de mesure de mouvement Y est choisi parmi la position X, la vitesse V, voire l'accélération,
- le capteur de mesure de mouvement est choisi parmi un ou plusieurs de : un capteur de position, un capteur de vitesse, (linéaire ou angulaire),
- le capteur de position est notamment un codeur linéaire ou angulaire,

- le capteur de vitesse est notamment un tachymètre,
- l'organe effecteur est un moteur, notamment un moteur à courant continu ou un moteur sans balai (« brushless »),
- l'organe effecteur est un actionneur hydraulique ou pneumatique,
- le modèle idéal de la boucle fermée est le modèle du système mécanique commandé en supposant qu'il n'y a pas de frottement sec,
- le modèle du système mécanique commandé idéal est connu à priori, notamment du fait qu'il est simple ou qu'il correspond à une combinaison déterminable de modèles élémentaires simples permettant son calcul,
- le modèle du système mécanique commandé idéal est déterminé à partir de mesures effectuées sur le système mécanique réel, notamment par stimulation dudit système mécanique, en effectuant, par exemple, une procédure d'identification hors ligne,
- le modèle idéal de la boucle fermée correspond au transfert entre $Y_r(t)$ et $Y(t)$ soit :

$$Y_m(t) = \frac{G(s) \cdot T(s)}{1 + G(s) \cdot F(s)} \cdot Y_r(t)$$

avec :

$$T(s) = M \cdot (s^2 + K_{c2} \cdot s + K_{c1})$$

$$F(s) = M \cdot (K_{c2} \cdot s + K_{c1})$$

$$G(s) = \frac{1}{M \cdot s^2}$$

- les frottements secs sont des frottements coulombiens,
- le signal de consigne Cr est choisi parmi un ou plusieurs des signaux suivants : de position Xr, de vitesse Vr,
- le signal de mouvement idéal Ym et le signal de mesure de mouvement Y sont choisis parmi des signaux de type : de position Ym X respectivement ou de vitesse Vm V respectivement, Selon l'invention, l'estimation $\hat{S}$ de valeur des frottements secs est calculée par une des deux méthodes, la première méthode utilise :

$$\dot{\hat{S}} = \lambda \cdot \Phi(t) \cdot \varepsilon(t)$$

(qui est la dérivé de l'estimation)
avec :
$\lambda$ un scalaire strictement positif correspondant au gain d'adaptation de la loi de commande adaptative de compensation,

$$\phi(t) = sgn(\gamma_r(t) \cdot \tau + V(t)) \text{ où } V(t)$$

est un signal de mesure de mouvement de vitesse, $\tau$ est une constante de temps mineure et $\gamma_r$ un signal de pilotage en accélération,
- on met en œuvre une loi de commande par retour d'état et le signal de pilotage en accélération est calculé par $\gamma_r = U_r + K_{c1}(Y_r - Y) + K_{c2}(V_r - V)$ avec $Y_r$, $V_r$ des signaux de consigne et $X$, $V$ des signaux de mesure de mouvement et $K_{C1}$ et $K_{C2}$ des gains de retour d'état, V résultant éventuellement d'une estimation (par un observateur en particulier) Selon l'invention, l'estimation $\hat{S}$ de valeur des frottements secs est calculée par une de deux méthodes, la deuxième méthode utilise :

$$\dot{\hat{S}} = \lambda \cdot \phi_f(t) \cdot \varepsilon(t)$$

(qui est la dérivé de l'estimation)
avec :
$\lambda$ un scalaire strictement positif qui est le gain d'adaptation de la loi de commande adaptative de compensation,

$$\Phi_f(t) = \frac{G(s)}{1+G(s)\cdot F(s)} \cdot \phi(t)$$

où F(s) est la fonction de transfert de la partie « rétroaction » du correcteur,
G(s)_est la fonction de transfert entrée-sortie du système à piloter, et dans le cas d'un asservissement en position par retour d'état avec une commande en force ou couple :

$$F(s) = M \cdot (K_{C2} \cdot s + K_{c1})$$

$$G(s) = \frac{1}{M \cdot s^2}$$

$\phi(t) = sgn(\gamma_r(t) \cdot \tau + V(t))$ où $V(t)$ est un signal de mesure de mouvement de vitesse, $\tau$ est une constante de temps mineure et $\gamma_r$ un signal de pilotage en accélération,

- dans le cas d'une loi de commande par retour d'état, le signal de pilotage en accélération est calculé par $\gamma_r = U_r + K_{c1}(Y_r - Y) + K_{c2}(V_r - V)$ avec $Xr, V_r$ des signaux de consigne et $X, V$ des signaux de mesure de mouvement et $K_{C1}$ et $K_{C2}$ des gains de retour d'état, V étant éventuellement estimé par ($\hat{V}$)
- les signaux de mesure de mouvement sont mesurés par des capteurs sur la masse ou inertie mobile,
- les signaux de mesure de mouvement sont issus de capteurs, notamment capteur de position -codeur - ou capteur de vitesse-tachymètre-,
- dans les signaux de mesure de mouvement, la position X est une position mesurée par un capteur,
- on met en œuvre un asservissement en position,
- dans les signaux de mesure de mouvement, la position X est choisie parmi :

  - une position de la masse ou inertie mesurée par un capteur,
  - une position de la masse ou inertie calculée à partir d'une mesure d'un signal de mouvement autre que la position de la masse ou inertie,

- on met en œuvre un asservissement en vitesse,
- dans les signaux de mesure de mouvement, la vitesse $V$ est choisie parmi :

  - une vitesse de la masse ou inertie mesurée par un capteur,
  - une vitesse de la masse ou inertie calculée à partir d'une mesure d'un signal de mouvement autre que la vitesse de la masse ou inertie et notamment la position de la masse ou inertie par calcul de dérivée,
  - une vitesse estimée $\hat{V}$ de la masse ou inertie par calcul, notamment au moyen d'un observateur d'état,

- on met en œuvre un asservissement en accélération,
- dans les signaux de mesure de mouvement, l'accélération est choisie parmi :

  - une accélération de la masse ou inertie mesurée par un capteur,
  - une accélération de la masse ou inertie calculée à partir d'une mesure d'un signal de mouvement autre que l'accélération de la masse ou inertie,
  - une accélération estimée de la masse ou inertie par calcul, notamment au moyen d'un observateur d'état,

- le gain d'adaptation $\lambda$ est variable,
- la loi de commande adaptative de compensation de frottements secs comporte un correcteur de type retour d'état,
- la loi de commande adaptative de compensation de frottements secs comporte un correcteur PI, d'actions proportionnelle intégrale,
- la loi de commande adaptative de compensation de frottements secs comporte un correcteur PID, de fonctions proportionnelle intégrale dérivée,
- on met en œuvre un correcteur PID, d'actions proportionnelle intégrale dérivée, et les fonctions proportionnel et dérivé du correcteur PID sont additionnées pour produire le signal de pilotage en accélération $\gamma_r$,
- au moins la sortie de la fonction intégrale du correcteur PID est disponible en tant que signal propre utilisable dans la loi de commande adaptative de compensation de frottements secs,
- on met en œuvre un correcteur PID, d'actions proportionnelle intégrale dérivée et, le correcteur PID produit par combinaison des fonctions proportionnel intégral dérivé un signal intermédiaire de commande U$_{PID}$ et ledit signal intermédiaire de commande U$_{PID}$ est repris dans la loi de commande adaptative de compensation de frottements secs pour produire $\gamma_r$ après passage dans un filtre passe haut,

- on met en œuvre un correcteur RST ou LQG, $H_\infty$,
- on met en œuvre un calculateur et au moins un capteur produisant le signal de mesure de mouvement de la masse ou inertie et on effectue des calculs en temps réel selon la loi la loi de commande adaptative de compensation de frottements secs pour produire le signal de commande U,
- le procédé est mis en œuvre dans un système mécanique existant comportant un correcteur PID et on utilise le correcteur PID avec la loi de commande adaptative de compensation de frottements secs,
- le correcteur PID existant produit le signal intermédiaire de commande U$_{PID}$.

L'invention concerne également un dispositif pour la mise en œuvre du procédé de l'invention et qui comporte un calculateur et au moins un capteur de mesure de mouvement produisant un signal de mesure de mouvement de la masse ou inertie et, en outre, des moyens de calcul en temps réel dans le calculateur et selon la loi de commande adaptative de compensation de frottements secs pour produire le signal de commande U.

L'invention concerne également un appareillage comportant :

- un système mécanique comportant au moins une masse ou inertie M mobile sous l'effet d'au moins un organe actionneur commandé par un signal de commande U, la masse ou inertie devant se mouvoir selon les prescriptions d'un signal de consigne C$_r$ choisi parmi un ou plusieurs de la position Xr, de la vitesse V$_r$ et de l'accélération, au moins un capteur de mouvement mesurant, le mouvement de la masse ou inertie produisant par un signal de mesure de mouvement choisi parmi un ou plusieurs de la position X, de la vitesse V et de l'accélération,
- un calculateur, et
- au moins un capteur de signal de mouvement de la masse,

le calculateur comportant des moyens de calcul de compensation adaptative selon la loi de commande adaptative de compensation de frottements secs mise en œuvre dans le procédé de l'invention.

La présente invention, sans qu'elle en soit pour autant limitée, telle que définie par les revendications va maintenant être exemplifiée avec la description qui suit de modes de réalisation et de mise en œuvre en relation avec :

la Figure 1 qui représente schéma bloc du modèle de frottements secs utilisé dans le cadre de la présente invention,
la Figure 2 qui représente la loi de commande avec compensation de frottement secs telle que proposée par Ph. de Larminat,
la Figure 3 qui représente un schéma de principe de la loi de commande adaptative de compensation de frottements secs de l'invention,
la Figure 4 qui représente sous forme d'un schéma de blocs fonctionnels une première loi de commande adaptative de compensation de frottements secs basée sur une première estimation $\dot{\hat{S}}$ calculée du module S de frottement Coulombien, pour un asservissement en position

la Figure 5 qui représente sous forme d'un schéma de blocs fonctionnels une deuxième loi de commande adaptative de compensation de frottements secs basée sur une seconde estimation $\dot{\hat{S}}$ calculée du module S de frottement Coulombien, pour un asservissement en position,
la Figure 6 qui représente sous forme d'un schéma de blocs fonctionnels une troisième loi de commande adaptative de compensation de frottements secs basée sur un correcteur PID et sur la seconde estimation $\dot{\hat{S}}$ calculée du module S de frottement Coulombien pour un asservissement en position,
la Figure 7 qui représente sous forme d'un schéma de blocs fonctionnels une quatrième loi de commande adaptative de compensation de frottements secs basée sur un correcteur PID et sur la seconde estimation $\dot{\hat{S}}$ calculée du module S de frottement Coulombien, pour un asservissement en position et vitesse avec une estimation pour cette dernière,
la Figure 8 qui représente sous forme d'un schéma de blocs fonctionnels une cinquième loi de commande adaptative de compensation de frottements secs pour un asservissement en vitesse et basée sur la première estimation $\dot{\hat{S}}$ calculée du module S de frottement Coulombien,

la Figure 9 qui représente sous forme d'un schéma de blocs fonctionnels une sixième loi de commande adaptative de compensation de frottements secs pour un asservissement en vitesse et basée sur la seconde estimation $\dot{\hat{S}}$ calculée du module S de frottement Coulombien, et

la Figure 10 qui représente sous forme d'un schéma de blocs fonctionnels une septième loi de commande adaptative de compensation de frottements secs pour un asservissement en vitesse et basée sur un correcteur PID et sur la seconde estimation S calculée du module S de frottement Coulombien.

La description détaillée de l'invention va tout d'abord commencer par une présentation du modèle de Ph. de Larminat avant de passer à un exemple de réalisation de l'invention dans lequel on rend adaptative la loi de commande de compensation pour le modèle en question.

Le modèle présenté ci-dessous est celui d'une masse ou inertie soumise à une force par un actionneur, par exemple un élément mobile actionné par un moteur électrique et en contact avec une paroi, ce contact occasionnant des frottements secs.

Il s'agit d'un modèle particulièrement simple, qui peut concerner aussi bien des mouvements en translation que rotation.

Considérons les types de données suivants :

M : Masse ou inertie du système mécanique mobile,

S : Module de frottement Coulombien

U : Force Motrice correspondant à une commande en effort/force ou en couple, et à ne pas confondre avec $U_r$ : (consigne d'accélération) qui sera introduite plus loin,

P : Force ou couple perturbateur dû aux frottements secs,

V : Vitesse du système mesurée par un capteur,

X : Position du système mesurée par un capteur,

Suivant la relation fondamentale de la dynamique on a :

$$\dot{V} = \frac{1}{M}(U - P) \qquad (1)$$

Où $\dot{v}$ est une accélération.

Le modèle de frottement proposé par Ph. de Larminat est le suivant :

$$P = min\left(max\left(\frac{VM}{\tau} + U, -S\right), S\right) \qquad (2)$$

Où V est la vitesse de la masse ou inertie mobile soumise au frottement.

Dans l'équation (2), $\tau$ est une constante de temps mineure, par exemple de quelques millisecondes.

En combinant (1) et (2), on a :

$$\dot{V} = \frac{1}{M}\left(U - min\left(max\left(\frac{VM}{\tau} + U, -S\right), S\right)\right) \qquad (3)$$

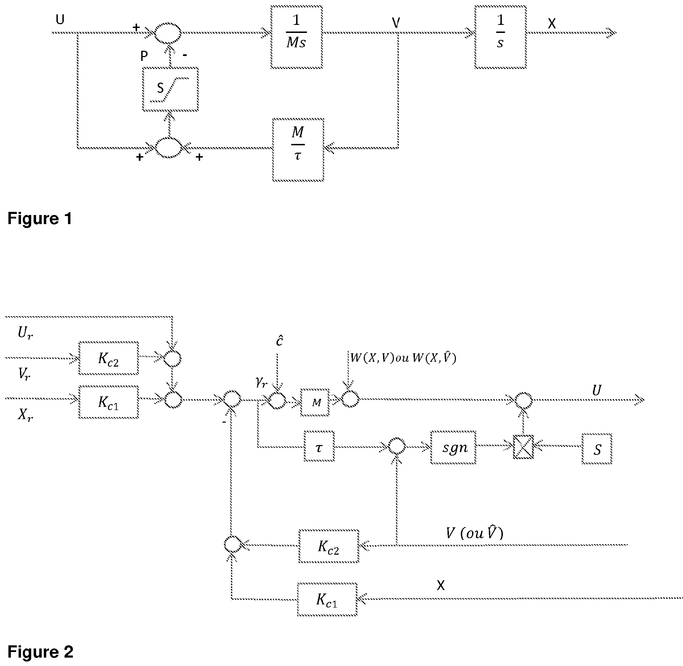

Le schéma bloc correspondant au modèle (3) de Ph. de Larminat est représenté sur la Figure 1.

A ce modèle brut peuvent être ajoutés divers éléments, par exemple une perturbation de charge C ou encore divers retours dépendant de X et/ou V (forces de rappel, frottements visqueux, non linéarités...) notés W, de telle sorte que l'équation devient :

$$\dot{v} = \frac{1}{M}(U - P - C - W) \qquad (4)$$

Par ailleurs, un modèle plus complet a été développé par le même auteur pour la prise en compte de l'effet Stribeck.

La loi de de compensation de frottements secs développée dans le même ouvrage, qui est non adaptative, s'appuie sur une commande par retour d'état du type :

$$U = M \cdot \left( U_r + K_{c1}(X_r - X) + K_{c2}(V_r - V) \right) \qquad (5)$$

Où

$X_r$ : Consigne de position par une référence issue d'un générateur de trajectoire, pour cette loi de commande de position,
$V_r$ : Consigne de vitesse par une référence issue d'un générateur de trajectoire,
$U_r$ : Consigne d'accélération par une référence issue d'un générateur de trajectoire,
$K_{C1}$ et $K_{C2}$ sont des gains de retour d'état,
$X$ : un signal de position de la masse ou inertie soumise à frottement,
$V$ : un signal de vitesse la masse ou inertie soumise à frottement.
Les signaux de vitesse et de position de la masse ou inertie qui sont des signaux de mesure de mouvement peuvent provenir de capteurs ou être calculés : la vitesse V qui est un signal de mesure de mouvement peut être estimée à partir de X si aucun capteur de vitesse ne fournit cette information.

A la loi de commande par retour d'état « brute » de l'équation (5), il est possible de rajouter une compensation des perturbations de charge C et autres retours W de telle sorte que l'on ait :

$$U = M \cdot \left( U_r + K_{c1}(X_r - X) + K_{c2}(V_r - V) \right) + C + W(Y_r, V) \qquad (6)$$

La compensation du frottement dans l'ouvrage précité se fait en rajoutant dans l'équation (6) un terme :

$$S \cdot sgn(V + \gamma_r \cdot \tau) \qquad (7)$$

Avec :

$$\gamma_r = U_r + K_{c1}(X_r - X) + K_{c2}(V_r - V) \qquad (8)$$

$sgn()$ étant la fonction signe.

De telle sorte que la loi de compensation de frottements proposée par Ph. de Larminat s'écrit finalement :

$$U = M \cdot \gamma_r + C + W(Y_r, V) + S \cdot sgn(V + \gamma_r \cdot \tau) \qquad (9)$$

Le schéma bloc correspondant à cette loi de compensation (9) de frottements de Ph. de Larminat est représenté sur la Figure 2.

La loi de compensation de frottements dans l'équation (9) présente l'inconvénient de ne pas être adaptative et elle est de ce fait d'un intérêt industriel restreint, puisque les variations des paramètres des frottements sont importantes au cours de la vie d'un produit.

On va donc maintenant expliquer le procédé de l'invention qui permet, en rendant adaptative la loi de compensation (9), d'obtenir un meilleur fonctionnement des machines comportant des parties mobiles commandées subissant des frottements. L'invention permet donc d'obtenir une loi de commande adaptative de compensation de frottements basée sur une loi de compensation (9) de frottements secs non adaptative telle que celle de Ph. de Larminat.

Cette loi de commande adaptative de compensation estime $S$ (Module de frottement Coulombien) en temps réel, l'estimée étant notée $\hat{S}$, de façon à injecter ce paramètre dans la loi de compensation.

Si on applique la loi de commande (5) sur le système décrit par l'équation (1) en faisant l'hypothèse $P = 0$, on aboutit à un suivi parfait de la consigne $Y_r$ par $Y$ c'est-à-dire :

$$Y(t) = Y_r(t) \, \forall t \qquad (10)$$

En présence de frottements secs, c'est-à-dire $\varepsilon(t) \neq 0$, l'équation (10) n'est plus vérifiée, s'il n'y a pas le dispositif de compensation décrit par les équations (7) et (9).

Définissons l'écart à la consigne $\varepsilon(t)$ entre la sortie d'un modèle idéal de la boucle fermée $Y_m(t)$ et la sortie de la boucle fermée réelle $Y(t)$ (incluant le système soumis aux frottements secs), soumis à la même consigne $Y_r(t)$ :

$$\varepsilon(t) = Y_r(t) - Y(t) \qquad (11)$$

La loi de commande adaptative que l'on se propose de développer a pour but de minimiser un critère portant sur $\varepsilon(t)$. Par exemple, la minimisation peut porter sur :

- $\varepsilon^2(t)$ à chaque instant,
- sur $\int \varepsilon^2(t)dt$.

D'autres critères de minimisation basés sur $\varepsilon(t)$ peuvent être également utilisés.

D'une façon plus générale $\varepsilon(t)$ peut être définie comme un écart calculé entre une sortie $Y_m$ d'un modèle idéal de la boucle fermée désirée et une sortie -aussi appelée signal/signaux de retour-, notamment par mesure, $Y$ du système mécanique mobile, tous deux soumis à la consigne $Y_r$ c'est-à-dire :

$$\varepsilon(t) = Y_m - Y \qquad (12)$$

L'équation (11) correspond à un cas particulier où le modèle idéal de la boucle fermée correspond à un gain unité.

On comprend que l'écart peut être calculé entre toutes sorties du même type du modèle idéal et du système mécanique, et pas seulement de type position X. Ainsi, l'écart peut être calculé par différence entre des sorties de type vitesse.

La loi adaptative consiste, à partir de $\varepsilon(t)$, à déterminer $\hat{S}$, estimée du module de Coulomb $S$ et à injecter cette estimée dans l'équation (9).

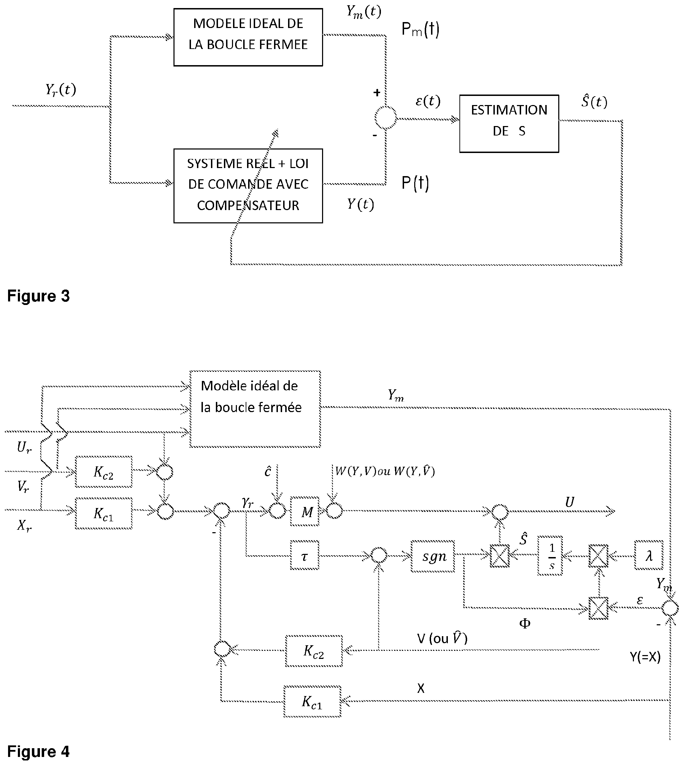

La représentation schématique du principe de la loi de commande adaptative de compensation de frottements secs est donnée sur la Figure 3.

La loi de commande non adaptative selon l'équation (9) proposée par Ph. de Larminat apporte une compensation parfaite pour le modèle de frottement de l'équation (3) à condition que l'estimée $\hat{S}(t)$ de $S(t)$ soit exacte. Dans ce cas, on a simplement :

$$\dot{V} = \gamma_r \qquad (13)$$

En général l'estimation de S n'est pas parfaite, et on définit l'écart d'estimée :

$$\tilde{S} = \hat{S} - S \qquad (14)$$

Dès lors que l'estimation $\hat{S}(t)$ de $S(t)$ est imparfaite, il vient en combinant les équations (9), (3) et (14):

$$M \cdot \dot{V} = \gamma_r + (S + \tilde{S}) \cdot sgn(\gamma_r \cdot \tau + V) - \min(\max\left(U + \frac{M}{\tau}, -S\right), S) \qquad (15)$$

Mais, comme $S \cdot sgn(\gamma_r \cdot \tau + V)$ compense $\min(\max\left(U + \frac{M}{\tau}, -S\right), S),$ on en déduit :

$$M \cdot \dot{V} = \gamma_r + \tilde{S} \cdot sgn(\gamma_r \cdot \tau + V) \qquad (16)$$

On peut considérer le second terme de la partie droite de l'équation (16), comme une perturbation additive en entrée du système agissant dans la boucle fermée.

Posons $d$ cette « perturbation additive » :

$$d(t) = \tilde{S} \cdot sgn(\gamma_r \cdot \tau + V) \qquad (17)$$

Par ailleurs, lorsque l'on considère uniquement la partie linéaire de la loi de commande c'est-à-dire l'équation (6), on peut voir que cette loi est décomposable en une partie d'action anticipatrice ou « feedforward » $T(s)$ et en une partie en rétroaction ou « feedback » $F(s)$, loi pouvant être exprimée au moyen de la variable de Laplace s et ayant pour variables des entrées de consigne et de mesure $Y(t)$ et $Y_r(t)$ respectivement. En particulier cette loi peut inclure un observateur de la perturbation de charge.

Ainsi, de la façon la plus générale, la commande $U(t)$ peut s'exprimer sous la forme :

$$U(t) = T(s) \cdot Y_r(t) - F(s) \cdot Y(t) \qquad (18)$$

Si l'on considère la loi de commande de l'équation (9) restreinte à ses composantes linéaires, et également en omettant le terme de perturbation de charge $C$ on a :

$$T(s) = M \cdot (s^2 + K_{c2} \cdot s + K_{c1})$$

$$F(s) = M \cdot (K_{c2} \cdot s + K_{c1})$$

Et le transfert entre $U(t)$ et $Y(t)$ peut également être modélisée par une fonction de transfert très simple, par un double intégrateur, $G(s)$ :

$$Y(t) = G(s).U(t) = \frac{1}{M \cdot s^2} \cdot U(t) \qquad (19)$$

La fonction de transfert entre la « perturbation additive » $d(t)$ et la sortie $Y(t)$ en boucle fermée s'écrit :

$$Y(t) = \frac{G(s)}{1+G(s) \cdot F(s)} d(t) + \frac{G(s) \cdot T(s)}{1+G(s) \cdot F(s)} \cdot Y_r(t) \qquad (20)$$

La fonction de transfert du modèle idéal de la boucle fermée (voir équation 12), correspond par définition au transfert entre $Y_r(t)$ et $Y(t)$ :

$$Y_m(t) = \frac{G(s) \cdot T(s)}{1+G(s) \cdot F(s)} \cdot Y_r(t) \qquad (21)$$

Dans ce cas, l'erreur entre la sortie du modèle idéal $Y_m(t)$ et la sortie du système $Y(t)$ en boucle fermée par combinaison des équations 12, 20, 21, s'écrit :

$$\varepsilon(t) = -\frac{G(s)}{1+G(s) \cdot F(s)} \, d(t) \qquad (22)$$

$d(t)$ étant exprimé suivant l'expression (17).

Dans cette équation (17), on note que $d(t)$ est affine en $\tilde{S}$.

Cela conduit à proposer pour loi d'estimation de $S$, la loi suivante :

$$\dot{\hat{S}} = \lambda \cdot \Phi(t) \cdot \varepsilon(t) \qquad (23)$$

Avec :

$\lambda$ est un scalaire strictement positif, qui est par définition le gain d'adaptation, $\phi(t) = sgn(\gamma_r(t) \cdot \tau + V(t))$ si la vitesse $V(t)$ est mesurée, sinon on utilise une estimée $\hat{V}(t)$ de $V(t)$, à la place de $V(t)$ et qui est calculée par exemple au moyen d'un observateur d'état.

L'application de l'équation (23) d'estimation de $S$ à la loi de commande adaptative de compensation de frottements secs de la Figure 3 appliquée au modèle de la compensation de frottements secs de Ph. de Larminat de l'équation (9)/Figure 2 donne la loi de compensation adaptative représentée sous forme de blocs sur la Figure 4 et qui est du type retour d'état.

Sur la partie gauche de la Figure 4, on retrouve des signaux d'entrée de consigne, ici $U_r$, $V_r$, Xr. Vers la droite de cette même Figure on retrouve d'autres signaux de mesure obtenus des mesures sur le système mécanique mobile ou qui sont calculées avec ici la vitesse V mesurée ou son estimation et la position X mesurée. En sortie on trouve le signal de commande U destiné à commander au moins un moteur/effecteur déplaçant une masse ou inertie soumise à un frottement, la masse ou inertie pouvant comprendre des éléments mobiles du moteur/effecteur.

En haut de la Figure 4, on trouve le bloc correspondant au modèle idéal de la boucle fermée qui correspond à la fonction de transfert donnée à l'équation (21) ci-dessus. Ce modèle idéal reçoit en entrée les signaux d'entrée de consigne $U_r$, $V_r$, Xr. Ce modèle idéal produit en sortie un signal de mouvement idéal relatif au mouvement de la masse ou inertie selon le modèle idéal (supposé sans frottement) du système et qui est ici de type position : $Y_m$.

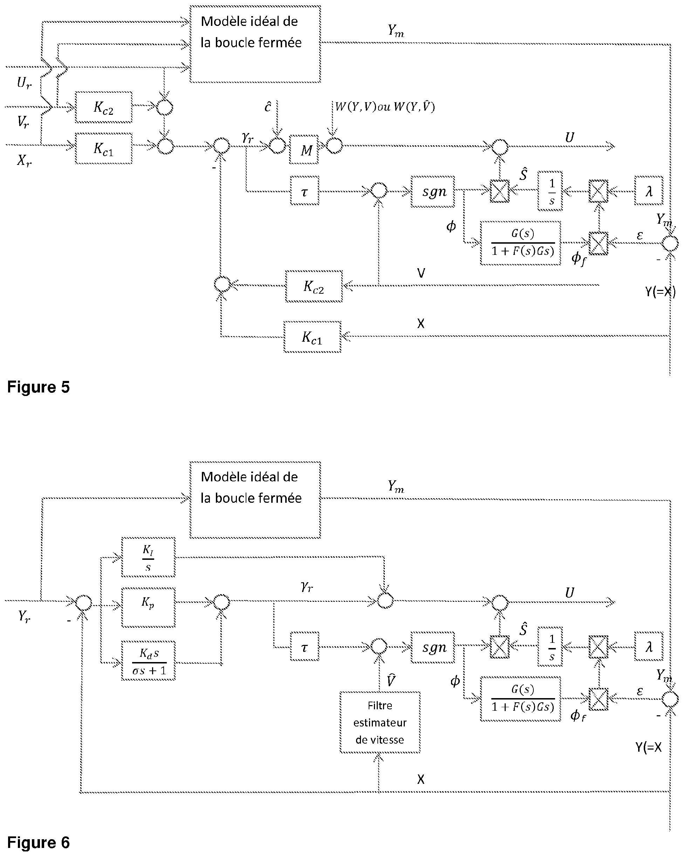

Vers le bas de la Figure 4, on trouve les blocs de calcul et de compensation selon le modèle de la compensation de frottements secs de Ph. de Larminat pour produire le signal de commande U. On retrouve des blocs correspondant aux calculs de l'équation 9 avec côtés des consignes et des mesures des blocs $K_{C1}$ et $K_{C2}$ qui sont les gains de retour d'état déjà introduits. On retrouve des blocs correspondants à la masse ou l'inertie M de l'élément mobile en mouvement et à la constante de temps mineure $\tau$. On trouve enfin les blocs spécifiques de calcul de l'estimation $\dot{\hat{S}}$ calculée selon un premier mode de calcul présenté ci-dessus et utilisant directement $\phi(t)$ (on verra en relation avec la Figure 5 un second mode de calcul de $\dot{\hat{S}}$ ).

L'étude de la convergence de la loi (23) peut être faite en utilisant la théorie de la passivité. On montre en particulier qu'une condition suffisante de convergence est que la fonction de transfert $\frac{G(s)}{1+G(s)F(s)}$ soit réelle positive, c'est-à-dire que le lieu de Nyquist de la dite fonction de transfert doit être intégralement comprise dans le demi-plan droit du plan complexe.

Cette condition de convergence est potentiellement pénalisante, aussi a-t-on tout intérêt à la relâcher en substituant $\phi_f(t)$ à $\phi(t)$ selon l'équation suivante (24) :

$$\Phi_f(t) = \frac{G(s)}{1+G(s)\cdot F(s)} \cdot \phi(t) \qquad (24)$$

La loi d'estimation de S s'écrivant alors :

$$\dot{\hat{S}} = \lambda \cdot \phi_f(t) \cdot \varepsilon(t) \qquad (25)$$

L'application de l'équation (25) d'estimation de S à la loi de commande adaptative de compensation de frottements secs de la Figure 3 appliquée au modèle de la compensation de frottements secs de Ph. de Larminat de l'équation (9)/Figure 2 donne la loi de commande adaptative représentée sous forme de blocs sur la Figure 5.

La loi de commande adaptative de compensation de frottements secs représentée par blocs sur la Figure 5 correspond à la représentation de la Figure 4 sauf pour ce qui concerne les blocs spécifiques de calcul de l'estimation $\dot{\hat{S}}$ qui est ici calculée selon un second mode de calcul où $\phi_f(t)$ a été substitué à $\phi(t)$.

On peut mettre en œuvre des algorithmes de calculs, en particulier en temps réel, basés sur les lois de commande adaptatives de compensation de frottements secs représentées sur les Figures 4 et 5.

On peut montrer que les algorithmes basés sur ces Figures 4 et 5 et donc sur les équations respectives (23) et (25), tendent à minimiser $\varepsilon^2(t)$ à chaque instant et est assimilable à l'algorithme du gradient.

Il possible de complexifier les lois de commande adaptatives de compensation précédentes en rendant le gain d'adaptation $\lambda$ variable, dans le but de minimiser par exemple la somme des carrés de $\varepsilon(t)$, ou encore la somme des carrés de $\varepsilon(t)$ pondérés par un facteur d'oubli.

Dans ce dernier cas, le gain d'adaptation $\lambda$ peut, par exemple s'exprimer suivant l'équation (26) :

$$\dot{\lambda}(t) = -(1 - \mu) \cdot F^{-1}(t) + \Phi^2(t) \qquad (26)$$

Ou encore l'équation (27) :

$$\dot{\lambda}(t) = -(1-\mu) \cdot F^{-1}(t) + \phi_f^2(t) \qquad (27)$$

Dans les équations (26) et (27), le coefficient $\mu$ est le facteur d'oubli mentionné plus haut avec : $0 < \mu < 1$.

Dans le domaine des asservissements, les correcteurs PID (« proportionnel intégral dérivé ») sont de loin les plus couramment utilisés. Aussi, il est souhaitable de pouvoir disposer une loi de commande adaptative de compensation de frottements de ce type. On va donc maintenant décrite une loi de ce type toujours sur le modèle de frottements de Ph. de Larminat.

Le signal de commande d'un correcteur PID peut être exprimé de la façon suivante :

$$U_{PID}(t) = \left( K_p + \frac{K_i}{s} + \frac{K_d \cdot s}{\sigma \cdot s + 1} \right) \cdot (Y_r - Y) \qquad (28)$$

Avec :

$K_p$ : coefficient proportionnel,
$K_i$ : coefficient intégral,
$K_d$ : coefficient de la dérivée,
$\sigma$ : constante de temps de filtrage de l'action dérivée.

Il est à noter que cette représentation n'est pas unique, et qu'il existe un grand nombre de possibilités d'implémentation d'un PID, notamment parallèle, série, série-parallèle, néanmoins on va dans la suite décrire une loi de compensation basée sur la structure (28) sans que cela soit ne soit limitatif, puisque n'importe quelle implémentation d'un correcteur PID peut être substituée à (28).

Si l'on se reporte au schéma de la figure 2 pour y transposer un correcteur PID, on peut considérer que le signal $\gamma_r$ associé au correcteur de frottements est simplement le signal $U(t)$ de l'équation (28) auquel on a retranché l'action intégrale du correcteur PID. En effet, l'action intégrale est celle qui a pour rôle de compenser les perturbations statiques. Or on a fait l'hypothèse d'une perturbation de charge $C(t)$ statique, ce qui signifie que le rôle principal de l'action intégrale est de compenser la perturbation de charge.

Dans ces conditions, $\gamma_r(t)$ s'écrit :

$$\gamma_r(t) = \left( K_p + \frac{K_d \cdot s}{\sigma \cdot s + 1} \right) \cdot (Y_r - Y) \qquad (29)$$

Ainsi la structure de commande avec compensation adaptative de frottements secs se déduit immédiatement et on obtient la loi de commande adaptative PID de compensation de frottements représentée sous forme de blocs de la Figure 6.

Afin d'obtenir une estimation de la vitesse $\hat{V}$ à partir d'une information de position X obtenue par un capteur de position, un filtre estimateur de vitesse est mis en œuvre dans la loi de commande obtenue.

Incidemment, le filtre estimateur de vitesse peut être un filtre passe haut ou un observateur d'état et peut, en plus, avoir comme entrée supplémentaire, le signal de commande $U$, dans d'autres implémentations.

On peut noter que la loi de commande de cette Figure 6 reprend, d'une manière similaire à celle de la Figure 5, l'application de l'équation (25) d'estimation de $S$ à la loi de commande, ce qui introduit un bloc $\frac{G(s)}{1+G(s)F(s)}$ dans la loi. On comprend bien que dans une variante de réalisation, ce bloc $\frac{G(s)}{1+G(s)F(s)}$ puisse être omis pour retrouver une loi de commande qui s'apparente à celle de la Figure 4 mais dans le contexte d'un correcteur PID et dans ce cas, la partie droite de la Figure 6 reprend la structure de blocs de la partie droite de la Figure 4.

Sur cette structure de loi de commande PID, il est également possible de rajouter des blocs d'action anticipatrice ou « feedforward » sur la/les consignes de position, vitesse et/ou accélération pour constituer le signal $\gamma_r$.

Comme on l'a indiqué, il existe un grand nombre de formes de correcteur PID. Quelle que soit ladite forme, le signal $\gamma_r$ correspond à la part de commande hors compensation de la perturbation de charge.

Accessoirement, on peut noter par rapprochement avec l'équation (18) que dans le cas de la loi de commande PID implémenté sous la forme (28), on a aussi : $F(s) = \left(K_p + \frac{K_i}{s} + \frac{K_d \cdot s}{\sigma \cdot s + 1}\right),$ où $F(s)$ est la partie en rétroaction ou « feedback » signalée auparavant.

Dans certains cas, il n'est pas possible d'avoir accès aux signaux internes du correcteur PID, notamment lorsque le PID est un produit du commerce inclus dans un boîtier électronique spécifique, aussi il peut s'avérer nécessaire de calculer le signal $\gamma_r$ à partir du signal de commande en position produit par le correcteur PID dans sa globalité : $U_{PID}(t)$. En combinant (28) et (29), on trouve la relation :

$$\frac{\gamma_r}{U_{PID}} = \frac{(K_p \sigma + K_d) \cdot s^2 + s}{(K_p \sigma + K_d) \cdot s^2 + (K_I \sigma + K_p) \cdot s + K_I} \qquad (30)$$

La fonction de transfert de l'équation (30) est celle d'un filtre passe haut dont le gain est 1 lorsque $s \to \infty$.

Plus généralement on peut calculer le signal $\gamma_r$ à partir du signal de commande en position $U_{PID}$ par un filtrage passe haut qui n'obéit pas nécessairement à celui de l'équation (30). Ici aussi, le correcteur PID peut être implémenté sous des formes diverses avec ou sans blocs d'action anticipatrice (« feedforward »).

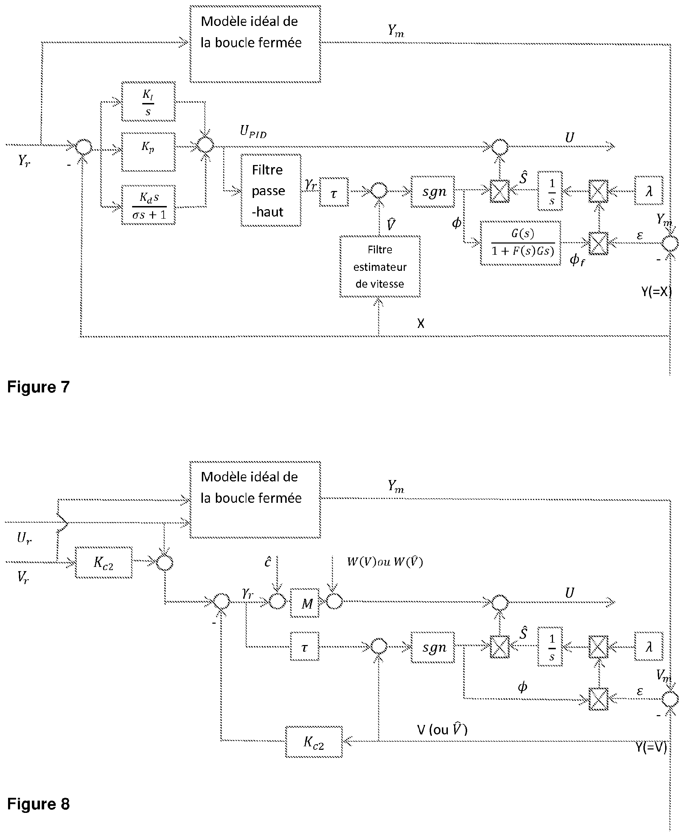

A titre d'exemple, on a représenté sur la Figure 7, sous forme d'un schéma de blocs, une loi de commande adaptative PID de compensation de frottements dans laquelle le signal $\gamma_r$ est calculé par un filtre passe-haut à partir du signal de commande en position $U_{PID}$ produit par le correcteur PID. Comme précédemment, dans une variante de réalisation, le bloc $\frac{G(s)}{1 + G(s)F(s)}$ peut-être omis.

Les lois de commande adaptatives présentées peuvent également être mises en œuvre avec un asservissement en vitesse.

Dans une structure d'asservissement en vitesse, c'est-à-dire où le signal à traiter par la boucle fermée, est la vitesse $V(t)$, la structure des lois de commande adaptative de compensation de frottements décrites en relation avec les figures 4, 5, 6 et 7 ne change pas fondamentalement.

En effet, la fonction de transfert $G(s)$ de l'équation (19) s'écrit alors simplement :

$$G(s) = \frac{1}{M \cdot s} \qquad (31)$$

La fonction de transfert F(s) se trouve également simplifiée.

Le signal de consigne $Y_r$ disparaît, de même que le signal de mesure $Y$. Subsistent les signaux de consigne $V_r$ et éventuellement $U_r$. Le signal de retour mesuré est ici $V$. De plus, la sortie du modèle idéal de la boucle fermée est un signal de vitesse $V_m$ et le signal $\varepsilon(t)$ se calcule en faisant la différence entre $V - V_m$. Enfin, un estimateur de V est rendu inutile du fait que cette grandeur de retour est nécessairement mesurée.

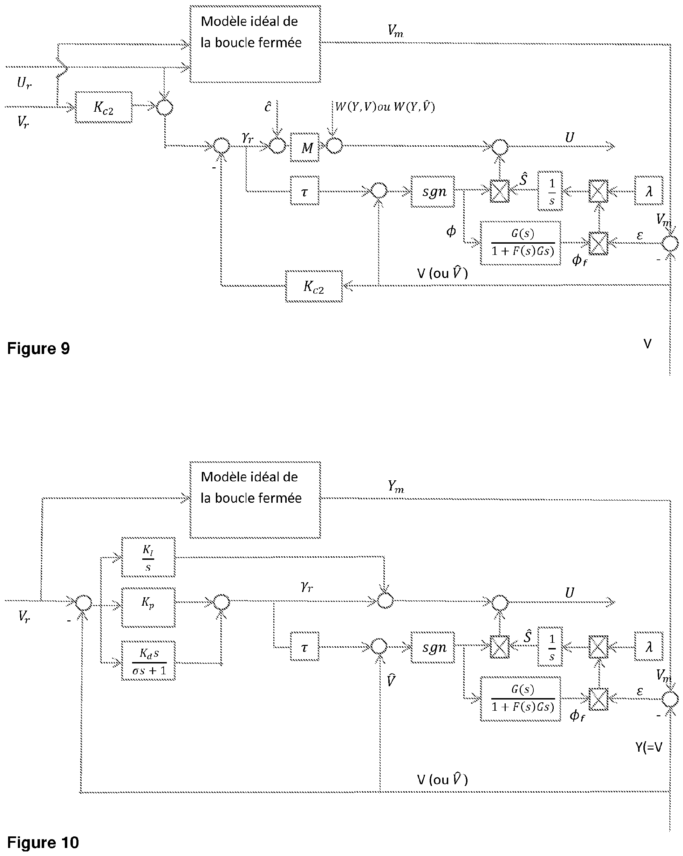

Ainsi, la loi de commande schématisée sur la figure 4 appliquée à un contexte d'asservissement de vitesse devient la loi de commande schématisée sur la Figure 8. De manière similaire, la loi de commande schématisée sur la figure 5 appliquée à un contexte d'asservissement de vitesse devient la loi de commande schématisée sur la Figure 9. Enfin, pour les lois en PID, la loi de commande schématisée sur la figure 6 appliquée à un contexte d'asservissement de vitesse devient la loi de commande schématisée sur la Figure 10. Comme indiqué précédemment, cette structure de la Figure 10 pour un asservissement PID peut être modifiée, notamment par omission de l'action dérivée et/ou par ajouts de blocs d'action anticipatrice (« feedforwards »).

La loi de commande de compensation adaptative de frottements qui a été présentée jusqu'à présent l'a été pour un correcteur de base de type retour d'état et, dans une variante, avec correcteur PID. Dans d'autres modalités de réalisation, il est possible d'utiliser cette loi de compensation avec d'autres structures de correction, par exemple RST, LQG, H∞. Dans tous les cas de figure, il est nécessaire de calculer le signal $\gamma_r$ qui correspond à la commande hors perturbation de charge.

On peut également envisager d'étendre cette loi de compensation à un asservissement d'accélération, à condition toutefois que l'on dispose une information sur la vitesse du système. En effet, si le système ne possède qu'un capteur d'accélération et pas de capteur de vitesse, ladite vitesse n'est pas « observable » au sens défini par Kalman.

**Revendications**

1. Procédé de compensation de frottements secs pour un système mécanique d'un appareillage comportant au moins une masse ou inertie M mobile en mouvement sous l'effet d'au moins un organe effecteur commandé par un signal de commande U en force ou couple, la masse ou inertie M devant se mouvoir selon les prescriptions d'un signal de consigne $C_r$ choisi parmi un ou plusieurs de la position Xr, de la vitesse $V_r$ et de l'accélération, le mouvement de la masse ou inertie étant **caractérisé par** un signal de mouvement choisi parmi un ou plusieurs de la position X, de la vitesse V et de l'accélération , dans lequel :

   - on définit un modèle idéal de la boucle fermée recevant en entrée le signal de consigne Cr et produisant en sortie un signal de mouvement idéal Ym relatif au mouvement de la masse ou inertie selon un modèle idéal du système,
   - on définit une loi de commande de compensation de frottements secs recevant en entrée le signal de consigne Cr et produisant en sortie le signal de commande U pour l'organe effecteur mettant la masse ou inertie en mouvement et dont le mouvement est mesuré par au moins un capteur de mesure de mouvement, ledit capteur produit un signal de mesure de mouvement Y, la loi de commande de compensation de frottements secs étant adaptative en fonction d'un paramètre de valeur des frottements secs S,
   **caractérisé en ce que**
   la loi de commande de compensation de frottements secs est basée sur le modèle de frottement suivant :

$$P = \min\left(\max\left(\frac{VM}{\tau} + U, -S\right), S\right),$$

   où V est la vitesse de la masse ou inertie mobile soumise au frottement et $\tau$ une constante de temps mineure,
   - on compare entre eux le signal de mouvement idéal Ym et le signal de mesure de mouvement Y pour produire un signal d'erreur $\varepsilon(t)$,
   - on calcule une l'estimation $\hat{S}$ des frottements secs S en fonction du signal d'erreur $\varepsilon(t)$,
   - on utilise ladite estimation $\hat{S}$ en tant que paramètre de valeur des frottements secs dans la loi de commande de compensation de frottements secs afin de corriger le signal de commande en fonction de l'estimation $\hat{S}$ de valeur des frottements secs, et
   **en ce que** l'estimation $\hat{S}$ de valeur des frottements secs est calculée par une des deux méthodes suivante :
   - soit en utilisant : $\dot{\hat{S}} = \lambda \cdot \Phi(t) \cdot \varepsilon(t)$ avec :
   $\lambda$ un scalaire strictement positif qui est le gain d'adaptation de la loi de commande adaptative de compensation, $\phi(t) = sgn(\gamma_r(t) \cdot \tau + V(t))$ où $V(t)$ est un signal de mesure de mouvement de vitesse, $\tau$ est une constante de temps mineure et $\gamma_r$ est un signal de pilotage en accélération,

   - soit en utilisant $\dot{\hat{S}} = \lambda \cdot \phi_f(t) \cdot \varepsilon(t)$ avec :
   $\lambda$ un scalaire strictement positif correspondant au gain d'adaptation de la loi de commande adaptative de compensation,

$$\Phi_f(t) = \frac{G(s)}{1 + G(s) \cdot F(s)} \cdot \phi(t)$$

   où F(s) est la fonction de transfert d'une partie « rétroaction » du correcteur,
   G(s) est la fonction de transfert entrée-sortie du système à piloter, et
   dans le cas d'un asservissement en position par retour d'état avec une commande en force ou couple :

$$F(s) = M \cdot (K_{c2} \cdot s + K_{c1})$$

$$G(s) = \frac{1}{M \cdot s^2}$$

$$\phi(t) = sgn(\gamma_r(t) \cdot \tau + V(t)) \text{ où } V(t)$$

est un signal de mouvement de vitesse, $\tau$ est une constante de temps mineure et $\gamma_r$ un signal de pilotage en accélération.

**2.** Procédé selon l'une la revendication 1, **caractérisé en ce que** le gain d'adaptation $\lambda$ est variable.

**3.** Procédé selon l'une quelconque des revendications 1 et 2, **caractérisé en ce qu'**on met en oeuvre un asservissement en vitesse et **en ce que** dans les signaux de mesure de mouvement, la vitesse $V$ est choisie parmi :

- une vitesse de la masse ou inertie mesurée par un capteur,
- une vitesse de la masse ou inertie calculée à partir d'une mesure d'un signal de mouvement autre que la vitesse de la masse ou inertie et notamment la position de la masse ou inertie par calcul de dérivée,
- une vitesse estimée $\hat{V}$ de la masse ou inertie par calcul, notamment au moyen d'un observateur d'état.

**4.** Procédé selon l'une quelconque des revendications 1 à 3, **caractérisé en ce que** l'on met en œuvre un asservissement en position et **en ce que** dans les signaux de mesure de mouvement, la position X est choisie parmi :

- une position de la masse ou inertie mesurée par un capteur,
- une position de la masse ou inertie calculée à partir d'une mesure d'un signal de mouvement autre que la position de la masse ou inertie.

**5.** Procédé selon l'une quelconque des revendications 1 à 4, **caractérisé en ce qu'**on met en œuvre une loi de commande par retour d'état et le signal de pilotage en accélération est calculé par $\gamma_r = U_r + K_{c1}(Y_r - Y) + K_{c2}(V_r - V)$ avec Xr, $V_r$ des signaux de consigne et X, V des signaux de mesure de mouvement et $K_{C1}$ et $K_{c2}$ des gains de retour d'état.

**6.** Procédé selon l'une quelconque des revendications 1 à 4, **caractérisé en ce qu'**on met en œuvre un correcteur PID, de fonctions proportionnelle intégrale dérivée, et **en ce que** les fonctions proportionnel et dérivé du correcteur PID sont additionnées pour produire le signal de pilotage en accélération $\gamma_r$.

**7.** Procédé selon l'une quelconque des revendications 1 à 4, **caractérisé en ce qu'**on met en œuvre un correcteur PID, de fonctions proportionnelle intégrale dérivée, et **en ce que** le correcteur PID produit, par combinaison des fonctions proportionnel intégral dérivé, un signal intermédiaire de commande $U_{PID}$ et **en ce que** ledit signal intermédiaire de commande $U_{PID}$ est repris dans la loi de commande adaptative de compensation de frottements secs pour produire le signal de pilotage en accélération $\gamma_r$ après passage dans un filtre passe haut.

**8.** Procédé selon l'une quelconque des revendications 1 à 4, **caractérisé en ce qu'**on met en œuvre un correcteur RST ou LQG, $H_\infty$

**9.** Dispositif pour la mise en œuvre du procédé selon l'une quelconque des revendications 1 à 8, **caractérisé en ce qu'**il comporte un calculateur et au moins un capteur de mesure de mouvement produisant un signal de mesure de mouvement de la masse ou inertie et en outre, des moyens de calcul en temps réel dans le calculateur et selon la loi de commande adaptative de compensation de frottements secs pour produire le signal de commande U.

**10.** Appareillage comportant :

- un système mécanique comportant au moins une masse ou inertie M mobile sous l'effet d'au moins un organe effecteur commandé par un signal de commande U, la masse ou inertie devant se mouvoir selon les prescriptions d'un signal de consigne $C_r$ choisi parmi un ou plusieurs de la position Xr, de la vitesse $V_r$ et de l'accélération
- au moins un capteur de mouvement mesurant le mouvement de la masse ou inertie et produisant un signal de mesure de mouvement choisi parmi un ou plusieurs de la position X, de la vitesse V et de l'accélération,
- un calculateur, et le calculateur comportant des moyens de calcul de compensation adaptative selon la loi de commande adaptative de compensation de frottements secs mise en œuvre dans le procédé de l'une quelconque des revendications 1 à 8.

**Patentansprüche**

1. Verfahren zur Kompensation von Trockenreibung für ein mechanisches System eines Geräts, das wenigstens eine Masse oder Trägheit M aufweist, die unter der Einwirkung wenigstens eines durch ein Kraft- oder Drehmoment-Steuerungssignal U gesteuerten Betätigungsorgans bewegbar ist, wobei sich die Masse oder Trägheit M unter den Vorgaben eines Sollsignals $C_r$ bewegen soll, das unter einem oder mehreren bezüglich der Position $X_r$, der Geschwindigkeit $V_r$ und der Beschleunigung ausgewählt wird, wobei die Bewegung der Masse oder Trägheit durch ein Bewegungssignal gekennzeichnet ist, das unter einem oder mehreren bezüglich der Position X, der Geschwindigkeit V und der Beschleunigung ausgewählt wird, wobei

   - ein ideales Modell der geschlossenen Schleife definiert wird, die am Eingang das Sollsignal Cr empfängt und am Ausgang ein Signal Ym für eine ideale Bewegung bezüglich der Bewegung der Masse oder Trägheit gemäß eines idealen Modells des Systems abgibt,
   - ein Gesetz zur Steuerung der Kompensation von Trockenreibung definiert wird, das am Eingang das Sollsignal Cr empfängt und am Ausgang das Steuerungssignal U für das Betätigungsorgan abgibt, das die Masse oder Trägheit in Bewegung setzt und dessen Bewegung durch wenigstens einen Bewegungsmeßsensor gemessen wird, wobei der Sensor ein Bewegungsmeßsignal Y erzeugt, wobei das Gesetz zur Steuerung der Kompensation von Trockenreibung in Abhängigkeit von einem Werteparameter der Trockenreibung S adaptiv ist,
   **dadurch gekennzeichnet, daß**
   das Gesetz zur Steuerung der Kompensation von Trockenreibung auf dem folgenden Reibungsmodell basiert:

   $$P = min \left( max \left( \frac{V M}{\tau} + U, -S \right), S \right),$$

   wobei V die Geschwindigkeit der der Trockenreibung ausgesetzten Masse oder Trägheit und $\tau$ eine kleinere Zeitkonstante ist,
   - das Signal der idealen Bewegung Ym mit dem Bewegungsmeßsignal Y verglichen wird, um ein Fehlersignal $\varepsilon (t)$ zu erzeugen,
   - ein Schätzwert $\hat{S}$ der Trockenreibung S in Abhängigkeit vom Fehlersignal $\varepsilon (t)$ berechnet wird,
   - der Schätzwert $\hat{S}$ als Werteparameter der Trockenreibung im Gesetz zur Steuerung der Kompensation von Trockenreibung verwendet wird, um das Steuerungssignal in Abhängigkeit vom Schätzwert $\hat{S}$ als Werteparameter der Trockenreibung zu korrigieren, und

   daß der Schätzwert $\hat{S}$ als Werteparameter der Trockenreibung nach einem der folgenden beiden Verfahren berechnet wird:
   - entweder unter Verwendung von $\dot{\hat{S}} = \lambda \cdot \Phi (t) \cdot \varepsilon (t)$ mit
   $\lambda$ als strikt positivem Skalarwert, der der Anpassungsgewinn des Gesetzes zur adaptiven Kompensation ist,

   $$\Phi (t) = sgn (\gamma_r (t) \cdot \tau + V (t)),$$

   wobei $V (t)$ ein Geschwindigkeitsmeßsignal, $\tau$ eine kleinere Zeitkonstante und $\gamma_r$ ein Beschleunigungssteuerungssignal ist,
   - oder unter Verwendung von $\dot{\hat{S}} = \lambda \cdot \Phi_f (t) \cdot \varepsilon (t)$ mit
   $\lambda$ als strikt positivem Skalarwert, der der Anpassungsgewinn des Gesetzes zur adaptiven Kompensation ist,

   $$\Phi (t) = \frac{G (s)}{1 + G (s) \cdot F (s)} \cdot \Phi (t)$$

   wobei F (s) die Transferfunktion eines retroaktiven Teils des Korrektors ist,
   G (s) die Transferfunktion Eingang-Ausgang des zu steuernden Systems ist, und
   im Fall einer Positionsansteuerung durch Zustandsrückkopplung mit einer Kraft- oder Drehmomentsteuerung:

$$F(s) = M \cdot (K_{c2} \cdot s + K_{c1})$$

$$G(s) = \frac{1}{M \cdot s^2}$$

$$\Phi(t) = sgn(\gamma_r(t) \cdot \tau + V(t)),$$

wobei $V(t)$ ein Geschwindigkeitsmeßsignal, $\tau$ eine kleinere Zeitkonstante und $\gamma_r$ ein Beschleunigungssteuerungssignal ist.

2.  Verfahren gemäß Anspruch 1, **dadurch gekennzeichnet, daß** der Anpassungsgewinn $\lambda$ variabel ist.

3.  Verfahren gemäß einem der Ansprüche 1 und 2, **dadurch gekennzeichnet, daß** eine Geschwindigkeitsansteuerung durchgeführt wird und daß in den Bewegungsmeßsignalen die Geschwindigkeit V aus

    - einer mittels eines Sensors gemessenen Geschwindigkeit der Masse oder Trägheit,
    - einer von einer Messung eines anderen Bewegungssignals als der Geschwindigkeit der Masse oder Trägheit ausgehenden Berechnung und insbesondere der Position der Masse oder Trägheit durch Berechnung der Ableitung,
    - einer durch Berechnung geschätzten Geschwindigkeit $\hat{V}$ der Masse oder Trägheit, insbesondere mittels eines Zustandsbeobachters
    ausgewählt wird.

4.  Verfahren gemäß einem der Ansprüche 1 bis 3, **dadurch gekennzeichnet, daß** eine Positionsansteuerung durchgeführt wird und daß in den Bewegungsmeßsignalen die Position X aus

    - einer mittels eines Sensors gemessenen Position der Masse oder Trägheit,
    - einer von einer Messung eines anderen Bewegungssignals als der Position der Masse oder Trägheit ausgehenden Berechnung der Position der Masse oder Trägheit ausgewählt wird.

5.  Verfahren gemäß einem der Ansprüche 1 bis 4, **dadurch gekennzeichnet, daß** ein Gesetz zur Steuerung durch Zustandsrückkopplung durchgeführt wird und das Beschleunigungssteuerungssignal mit $\gamma_r = U_r + K_{c1}(Y_r - Y) + K_{c2}(V_r - V)$ berechnet wird, wobei $X_r$, $V_r$ Sollsignale und X, V Bewegungsmeßsignale und $K_{c1}$ und $K_{c2}$ Zustandsrückkopplungsgewinne sind.

6.  Verfahren gemäß einem der Ansprüche 1 bis 4, **dadurch gekennzeichnet, daß** ein PID-Regler mit proportionaler, integraler, abgeleiteter Funktion eingesetzt wird und daß die proportionale, die integrale, die abgeleitete Funktion des PID-Reglers addiert werden, um das Beschleunigungssteuerungssignal $\gamma_r$ zu erhalten.

7.  Verfahren gemäß einem der Ansprüche 1 bis 4, **dadurch gekennzeichnet, daß** ein PID-Regler mit proportionaler, integraler, abgeleiteter Funktion eingesetzt wird und daß der PID-Regler durch Kombination der proportionalen, der integralen, der abgeleiteten Funktion ein Steuerungszwischensignal $U_{PID}$ erzeugt, das in das Gesetz zur adaptiven Steuerung der Kompensation von Trockenreibung übernommen wird, um das Beschleunigungssteuerungssignal $\gamma_r$ nach einem Durchgang durch ein Hochpaßfilter zu erhalten.

8.  Verfahren gemäß einem der Ansprüche 1 bis 4, **dadurch gekennzeichnet, daß** ein RST- oder LQD, $H_{oo}$-Regler eingesetzt wird.

9.  Vorrichtung zur Durchführung des Verfahrens gemäß einem der Ansprüche 1 bis 8, **dadurch gekennzeichnet, daß** sie einen Rechner und mindestens einen Bewegungsmeßsensor, der ein Bewegungsmeßsignal der Masse oder Trägheit erzeugt, und außerdem Mittel zum Echtzeitrechnen im Rechner und gemäß dem Gesetz zur adaptiven Steuerung der Kompensation von Trockenreibung aufweist, um das Steuerungssignal U zu erzeugen.

**10.** Gerät, das

- ein mechanisches System mit wenigstens einer Masse oder Trägheit M, die unter der Einwirkung wenigstens eines durch ein Kraft- oder Drehmoment-Steuerungssignal U gesteuerten Betätigungsorgans bewegbar ist, wobei sich die Masse oder Trägheit M unter den Vorgaben eines Sollsignals $C_r$ bewegen soll, das unter einem oder mehreren bezüglich der Position $X_r$, der Geschwindigkeit $V_r$ und der Beschleunigung ausgewählt ist,
- wenigstens einen Bewegungssensor, der die Bewegung der Masse oder Trägheit mißt und ein Bewegungsmeßsignal erzeugt, das unter einem oder mehreren aus der Position X, der Geschwindigkeit V und der Beschleunigung ausgewählt ist,
- einen Rechner, wobei der Rechner Mittel zum Berechnen der adaptiven Kompensation gemäß dem Gesetz zur adaptiven Steuerung der Kompensation der Trockenreibung aufweist, das im Verfahren gemäß einem der Ansprüche 1 bis 8 durchgeführt wird,
aufweist.

**Claims**

**1.** A dry friction compensation method for a mechanical system of an apparatus including at least one mass or inertia M mobile under the effect of at least one effector element controlled by a force or torque control signal U, the mass or inertia M having to move according to the instructions of a setpoint signal $C_r$ chosen among one or several of the position $X_r$, the speed $V_r$ and the acceleration, the motion of the mass or inertia being **characterized by** a motion signal Y chosen among one or several of the position X, the speed V and the acceleration, in which:

- an ideal model of the closed loop is defined, receiving as an input the setpoint signal Cr and producing as an output an ideal motion signal Ym relating to the motion of the mass or inertia according to an ideal model of the mechanical system,
- a dry friction compensation control law is defined, receiving as an input the setpoint signal Cr and producing as an output the control signal U for the effector element putting the mass or inertia in motion and whose motion is measured by at least one motion measuring sensor, said sensor producing a motion measurement signal Y, the dry friction compensation control law being adaptive as a function of a parameter of dry friction value S, said dry friction compensation control law being based on the following friction model:

$$P = \min\left(\max\left(\frac{VM}{\tau} + U, -S\right), S\right),$$

where V is the speed of the mobile mass or inertial subjected to the friction and $\tau$ a minor time constant,
- the ideal motion signal Ym and the motion measurement signal Y are compared with each other to produce an error signal $\varepsilon(t)$,
- the estimation $\hat{S}$ of the dry friction S is calculated as a function of the error signal $\varepsilon(t)$,
- said estimation $\hat{S}$ is used as a parameter of dry friction value in the dry friction compensation control law in order to correct the control signal as a function of the estimation $\hat{S}$ of the dry friction value, and in that that the estimation $\hat{S}$ of the dry friction value is calculated from one of the two following methods:

- either using: : $\dot{\hat{S}} = \lambda \cdot \Phi(t) \cdot \varepsilon(t),$ with:

$\lambda$ a strictly positive scalar corresponding to the adaptation gain of the adaptive compensation control law, $\phi(t) = sgn(\gamma_r(t) \cdot \tau + V(t))$ where $V(t)$ is a speed motion measurement signal, $\tau$ is a minor time constant and $\gamma_r$ is an acceleration piloting signal,

- either using : $\dot{\hat{S}} = \lambda \cdot \phi_f(t) \cdot \varepsilon(t) ,$
with:

$\lambda$ a strictly positive scalar corresponding to the adaptation gain of the adaptive compensation control law,

$$\Phi_f(t) = \frac{G(s)}{1+G(s)\cdot F(s)} \cdot \phi(t)$$

where F(s) is the transfer function of the "feedback" part of the corrector, G(s) is the input-output transfer function of the system to be piloted, and
in the case of a state-feedback position control with force or torque control:

$$F(s) = M \cdot (K_{c2} \cdot s + K_{c1})$$

$$G(s) = \frac{1}{M \cdot s^2}$$

$$\phi(t) = sgn(\gamma_r(t) \cdot \tau + V(t))$$

where $V(t)$ is a speed motion measurement signal, $\tau$ is a minor time constant and $\gamma_r$ is an acceleration piloting signal,

2. The method according to claim 1, **characterized in that** the adaptation gain $\lambda$ is variable.

3. The method according to any one of claims 1 and 2, **characterized in that** a speed-feedback control is implemented and **in that**, in the motion measurement signals, the speed $V$ is chosen among:

   - a speed of the mass or inertia measured by a sensor,
   - a speed of the mass or inertia calculated from a measurement of a motion signal other than the speed of the mass or inertia and in particular the position of the mass or inertia by derivative calculation,
   - a speed $\hat{V}$ of the mass or inertia by estimated calculation, in particular by means of a state observer.

4. The method according to any one of claims 1 to 3, **characterized in that** a position-feedback control is implemented and **in that**, in the motion measurement signals, the position X is chosen among:

   - a position of the mass or inertia measured by a sensor,
   - a position of the mass or inertia calculated from a measurement of a motion signal other than the position of the mass or inertia.

5. The method according to any one of claims 1 to 4, **characterized in that** a state-feedback control law is implemented and the acceleration piloting signal is calculated by $\gamma_r = U_r + K_{c1}(Y_r - Y) + K_{c2}(V_r - V)$ with $X_r$, $V_r$ setpoint signals, X, V motion measurement signals, and $K_{C1}$ and $K_{C2}$ state-feedback gains.

6. The method according to any one of claims 1 to 4, **characterized in that** a PID corrector, of proportional-integral-derivative functions, is implemented, and **in that** the proportional-integral-derivative functions of the PID are added to produce the acceleration control signal $\gamma_r$.

7. The method according to any one of claims 1 to 4, **characterized in that** a PID corrector, of proportional-integral-derivative functions, is implemented, and **in that** the PID produces, by combination of the proportional-integral-derivative functions, an intermediate control signal $U_{PID}$ and **in that** said intermediate control signal $U_{PID}$ is used in the adaptive dry friction compensation control law to produce the acceleration control signal $\gamma_r$ after passage through a high-pass filter.

8. The method according to any one of claims 1 to 4, **characterized in that** an RST or LQG, $H_\infty$ corrector is implemented.

9. A device for implementing the method according to any one of the claims 1 to 8, **characterized in that** it includes a calculator and at least one motion measurement sensor producing a mass or inertia motion measurement signal and, further, means for real time calculation in the calculator and according to the adaptive dry friction compensation control law to produce the control signal U.

**10.** An apparatus including:

- a mechanical system including at least one mass or inertia M mobile under the effect of at least one actuator element controlled by a control signal U, the mass or inertia having to move according to the instructions of a setpoint signal $C_r$ chosen among one or several of the position Xr, the speed $V_r$ and the acceleration,
- at least one motion sensor measuring the motion of the mass or inertia and producing a motion measurement signal chosen among one or several of the position X, the speed V and the acceleration,
- a calculator, and the calculator including means for adaptive compensation calculation according to the adaptive dry friction compensation control law implemented in the method according to any one of claims 1 to 8.

**Figure 1**

**Figure 2**

**Figure 3**

**Figure 4**

**Figure 5**

**Figure 6**

**Figure 7**

**Figure 8**

Modèle idéal de
la boucle fermée

$V_m$

$U_r$

$V_r$

$K_{c2}$

$\hat{c}$

$W(Y,V)\,ou\,W(Y,\hat{V})$

$\gamma_r$

$M$

$U$

$\tau$

$sgn$

$\hat{S}$

$\dfrac{1}{s}$

$\lambda$

$\phi$

$\dfrac{G(s)}{1+F(s)Gs}$

$V_m$

$\varepsilon$

$\phi_f$

V (ou $\hat{V}$)

$K_{c2}$

V

**Figure 9**

Modèle idéal de
la boucle fermée

$Y_m$

$V_r$

$\dfrac{K_I}{s}$

$\gamma_r$

$U$

$K_p$

$\dfrac{K_d s}{\sigma s+1}$

$\tau$

$sgn$

$\hat{S}$

$\dfrac{1}{s}$

$\lambda$

$\hat{V}$

$\dfrac{G(s)}{1+F(s)Gs}$

$V_m$

$\varepsilon$

$\phi_f$

Y(=V

V (ou $\hat{V}$)

**Figure 10**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **H.OLSON, K.J. ASTRÖM et al.** Friction models and friction compensation. *European journal of control,* 1998
- **PHILIPPE DE LARMINAT.** Automatique appliquée
- **M. ITTHISE NILKHAMHANG.** Adaptive Friction Compensation using the GMS Model with Polynomial Stribeck function. *IEEE International Conférence on Control Applications,* 2006